# EUROPÄISCHE PATENTANMELDUNG

(11) **EP 3 453 773 A1**
(43) Veröffentlichungstag der Anmeldung: **13.03.2019**
(21) Anmeldenummer: 17189556.8
(22) Anmeldetag: 06.09.2017
(51) Int. Cl.: C21B 13/00

(54) **REDUKTIONSGASGEWINNUNG AUS GESÄTTIGTEM TOPGAS**

(71) Anmelder: Primetals Technologies Austria GmbH, 4031 Linz (AT)
(72) Erfinder: Steinwandter, Andreas, 4020 Linz (AT); Millner, Robert, 3382 Loosdorf (AT); Ofner, Hanspeter, 4055 Pucking (AT)
(74) Vertreter: Metals@Linz

(57) **Zusammenfassung**

Verfahren zur Reduktion von Metalloxiden (2) zu metallisiertem Material (3) durch Kontakt mit heißem Reduktionsgas, wobei ein anfallendes Topgas trocken entstaubt und in einem Rohgasgemisch mit gasförmigen Kohlenwasserstoffen reformiert wird. Der Wasserdampfgehalt des für die Zubereitung des Rohgasgemisches bestimmten trocken entstaubten Topgases wird in einem Sättiger (11) im Gegenstrom mit Sättigungswasser eingestellt, wobei die Temperatur des Sättigungswassers unter Vermischung von Kaltwasser mit einem Warmwasser, das eine höhere Temperatur als das Kaltwasser hat, zur Herstellung des Sättigungswassers auf einen Zielwert eingestellt wird. Eine Vorrichtung zur Durchführung eines solchen Verfahrens weist entsprechende Leitungsführungen auf.

## Beschreibung

### Gebiet der Technik

Die Anmeldung betrifft ein Verfahren zur Reduktion von Metalloxiden zu metallisiertem Material durch Kontakt mit heißem Reduktionsgas, wobei ein trocken entstaubtes Topgas anfällt, das gemeinsam mit gasförmigen Kohlenwasserstoffen zur Herstellung des Reduktionsgases katalytisch reformiert wird.

### Stand der Technik

Verfahren zur Direktreduktion von Eisenoxidträgern mittels eines durch Reformierung von Erdgas hergestellten Reduktionsgases sind bekannt, beispielsweise das MIDREX®-Verfahren wie in WO2011/012448 und WO2011/012452 beschrieben.

Eine im Reformer ablaufende Reaktion ist

CH₄ + H₂O → CO + 3 H₂

Entsprechend ist der Wasserdampfgehalt des zu reformierenden Rohgasgemischs ein bestimmender Faktor.

Eine weitere im Reformer ablaufende Reaktion ist:

CH₄ + CO₂ → 2 CO + 2 H₂

CO₂ wird beispielsweise in das zu reformierende Rohgasgemisch eingebracht, indem bei der Direktreduktion aus dem Reduktionsschacht abgezogenes Topgas nach Aufbereitung Erdgas zugemischt wird.

Das aus dem Reduktionsschacht abgezogene Topgas ist sehr staubbeladen. Daher ist eine Entstaubung notwendig, einerseits zur Vermeidung von staubbedingtem Verschleiß von Vorrichtungen wie Kompressoren und Leitungen, die zur Rezyklierung des Topgases - als Bestandteil des Rohgasgemisches für den Reformer und darauffolgend als Bestandteil des Reduktionsgases für den Reduktionsschacht - notwendig sind, zur Vermeidung von staubbedingtem Verschleiß im Reformer, und andererseits zur Vermeidung von Anlagerungen des Staubes, sowie zur Vermeidung von Behinderung der Reformierung im Reformer.

Die Anwendung von Nassentstaubung - beispielsweise mittels Venturiwäschern - und von Trockenentstaubung sind bekannt.

Bei der Nassentstaubung ist nachteilig, dass große Prozesswassermengen unter hohem Druck benötigt werden, welche im direkten Kontakt mit den Prozessgasen stehen. Der vom Gas abgeschiedene Staub fällt als nasser Schlamm in einem Klassierer beziehungsweise einem Eindicker an und muss aufwändig weiterbehandelt werden.

Bei der Trockenentstaubung ist nachteilig, dass die Temperatur des Topgases beim Entstaubungsschritt selbst praktisch nicht reduziert wird, und der Wasserdampfgehalt des Topgases entsprechend nicht durch Kondensation reduziert wird. Entsprechend weist ein derartig entstaubtes Topgas einen Wasserdampfgehalt auf, der für spätere Reformierung ungünstig hoch und schwankend ist. Eine auf die Trockenentstaubung folgende Kühlung ist daher notwendig, um einen Teil des Wasserdampfes zu kondensieren und auf einen kontrollierten Wert zu halten.

### Zusammenfassung der Erfindung

### Technische Aufgabe

Es ist die Aufgabe der vorliegenden Anmeldung, ein Verfahren bereitzustellen, das bei Trockenentstaubung eine einfache, wenig aufwändige und zügig auf verschiedene Anforderungen der Verfahrensführung reaktionsfähige Einstellung des Wasserdampfgehaltes erlaubt. Ebenso soll eine zur Erreichung dieser Ziele fähige Vorrichtung bereitgestellt werden.

### Technische Lösung

Diese Aufgabe wird gelöst durch ein
Verfahren zur Reduktion von Metalloxiden zu metallisiertem Material durch Kontakt mit heißem Reduktionsgas, wobei ein Topgas anfällt, wobei Trockenentstaubung des Topgases stattfindet, und wobei das Reduktionsgas zumindest zum Teil durch katalytische Reformierung eines Rohgasgemischs erhalten wird, wobei das Rohgasgemisch zumindest auf Basis von
- gasförmigen Kohlenwasserstoffen, bevorzugt Erdgas, und von
- zumindest einer Teilmenge des trocken entstaubten Topgases
zubereitet wird,
dadurch gekennzeichnet, dass der Wasserdampfgehalt des für die Zubereitung des Rohgasgemisches bestimmten trocken entstaubten Topgases in einem Sättiger im Gegenstrom mit Sättigungswasser eingestellt wird, wobei die Temperatur des Sättigungswassers unter Vermischung von Kaltwasser mit einem Warmwasser, das eine höhere Temperatur als das Kaltwasser hat, zur Herstellung des Sättigungswassers auf einen Zielwert eingestellt wird.

Die Einstellung des Wasserdampfgehaltes beziehungsweise die Einstellung des Zielwertes für die Temperatur des Sättigungswassers kann eine Steuerung oder eine Regelung sein.
Der Zielwert für die Temperatur des Sättigungswassers kann eine bestimmte Temperatur oder ein Temperaturbereich sein, genannt Temperatur-Zielbereich. Ebenso kann die Einstellung des Wasserdampfgehaltes einen bestimmten Wasserdampfgehalt zum Ziel haben oder einen Wertebereich, genannt Wasserdampf-Zielbereich.

Kaltwasser bezeichnet zur Einführung in den Sättiger vorgesehenes Wasser, das eine geringere Temperatur als das Warmwasser hat.
Warmwasser hat eine höhere Temperatur als das Kaltwasser. Es kann sich um ein warmes - in dem Sinne, dass es eine höhere Temperatur als das Kaltwasser hat - Prozesswasser handeln, das in dem Verfahren zur Reduktion von Metalloxiden an anderer Stelle anfällt - beispielsweise um Wasser, welches zum Kühlen von heißen Gasen innerhalb des Reduktionsverfahrens verwendet wird, wie für die Kühlung von Sealgas im Sealgaskühler oder einer Teilmenge des reformierten Gases in einem Gaskühler, und deren warme Wasserrückläufe - häufig auch Rein-Prozesswasser genannt -in einem Wasserbecken gesammelt werden; auch Sättigerabwasser kann in dieses Wasserbecken eingeleitet werden.
Es ist möglich, aus diesem Wasserbecken mit vereinigten warmen Wasserrückläufen eine Wassermenge einer Kühlung - beispielsweise in Wärmetauschern - zuzuführen und nach der Kühlung als Kaltwasser zu verwenden.

Im Sättiger wird der Wasserdampfgehalt des trocken entstaubten Topgases im Gegenstrom mit Sättigungswasser eingestellt.

Der Sättiger ist beispielsweise eine vom Sättigungswasser im Gegenstrom zum trocken entstaubten Topgas durchströmte Packungskolonne. Eine solche Packungskolonne weist typischerweise einen Wasserverteiler oberhalb der zu benetzenden Packung, letztere bestehend aus Füllkörpern oder einer strukturierten Packung oder ähnlichem auf, um einen guten Wärme- und Stoffaustausch zu gewährleisten. Oberhalb des Wasserverteilers oder am Austritt der Packungskolonne ist typischerweise ein Tröpfchenabscheider - Demister - eingebaut um den Mitriss von Tröpfchen mit dem Gasstrom zu verhindern.

Unter Metalloxiden werden bevorzugt Eisenoxide beziehungsweise eisenoxid-hältige Einsatzstoffe verstanden. Weiters können aber auch, gemäß Richardson-Jeffes-Diagramm, beispielsweise oxidische Erze von Nickel, Kupfer, Blei, Kobalt, reduziert werden.

Die Reduktion ist bevorzugt eine Direktreduktion.
Das metallisierte Material ist bevorzugt das Produkt der Direktreduktion.

Die Reduktion der Metalloxide erfolgt bevorzugt zu weitgehend metallisiertem Metall - das heißt, dass ein Metallisierungsgrad von beispielsweise typischerweise größer gleich 90% vorliegt, bevorzugt größer gleich 92% - , beispielsweise Eisenschwamm, auch genannt DRI direct reduced iron. Der Metallisierungsgrad ist das Verhältnis zwischen metallischem Eisen und Gesamteisen.

Das Produkt der Direktreduktion von eisenoxid-hältigen Einsatzstoffen, beispielsweise DRI oder HDRI, wird bevorzugt heiß brikettiert, beispielsweise zu hot briquetted iron HBI verarbeitet. Es kann aber auch im heißen Zustand aus dem Reduktionsschacht, in dem die Direktreduktion stattfindet, ausgetragen, und direkt im Stahlwerk genutzt werden - beispielsweise durch Zugabe in heißem Zustand in einen Elektrolichtbogenofen.

Die Trockenentstaubung erfolgt beispielsweise mittels Gewebefiltern wie beispielsweise Tuch- oder Schlauchfiltern. Für eine Grobentstaubung vor den Gewebefiltern kann auch eine Grobentstaubung auf Basis von beispielsweise Zyklon oder Staubsack vorgesehen sein.
Es kann das gesamte Topgas trocken entstaubt werden, oder ein mengenmäßiger Anteil des Topgases.

Das Reduktionsgas kann vollständig durch katalytische Reformierung eines Rohgasgemisches erhalten werden; es kann aber auch Bestandteile enthalten, die nicht aus der katalytischen Reformierung des Rohgasgemisches stammen.

Das Rohgasgemisch wird zumindest auf Basis von gasförmigen Kohlenwasserstoffen und von zumindest einer Teilmenge des trocken entstaubten Topgases zubereitet.

Die Formulierung "auf Basis von gasförmigen Kohlenwasserstoffen, bevorzugt Erdgas," umfasst sowohl einen einzelnen gasförmigen Kohlenwasserstoff, als auch Gasgemische, die einen oder mehrere gasförmige Kohlenwasserstoffe enthalten. Ein solches Gasgemisch ist beispielsweise Erdgas.
Es kann das gesamte trocken entstaubte Topgas verwendet werden, um das Rohgasgemisch zuzubereiten; es kann aber auch nur eine Teilmenge des trocken entstaubten Topgases dazu verwendet werden.

Der Wasserdampfgehalt des für die Zubereitung des Rohgasgemisches bestimmten trocken entstaubten Topgases wird in einem Sättiger im Gegenstrom mit Sättigungswasser eingestellt.

### Vorteilhafte Wirkungen der Erfindung

Bei der erfindungsgemäßen Verfahrensführung wird nach der Trockenentstaubung der Wasserdampfgehalt des für die Zubereitung des Rohgasgemisches bestimmten Topgases auf einen gewünschten Wert beziehungsweise einen gewünschten Wertebereich eingestellt. Erfindungsgemäß findet dazu als ein Verfahrensschritt statt, die Temperatur des Sättigungswassers unter Vermischung von Kaltwasser mit einem Warmwasser zur Herstellung des Sättigungswassers auf einen Zielwert einzustellen. In der Regel hat trocken entstaubtes Topgas einen Wasserdampfgehalt von etwa 20 bis 30 Volums%. Im Falle einer Kühlung durch Wassereindüsung vor der Trockenentstaubung kann der Wasserdampfgehalt auch auf über 30 Volums% , beispielsweise 32 Volums%, ansteigen.
Ziel ist es, einen für eine spätere Reformierung günstigen Wasserdampfgehalt einzustellen.

Der Zielwert für die Temperatur des Sättigungswassers wird so gewählt, dass sich nach der Wechselwirkung mit dem trocken entstaubten Topgas ein für die spätere Reformierung günstiger Wasserdampfgehalt im Topgas ergibt.

Zur Einstellung des Wasserdampfgehaltes können zusätzlich auch weitere Maßnahmen wie die Zugabe von Dampf oder die Einspritzung von flüssigem Wasser, beispielsweise mittels Einstoff- oder Zweistoffdüsen. erfolgen.

Zur Einstellung der Temperatur des Sättigungswassers können zusätzlich auch weitere Maßnahmen wie Kühlung oder Heizung erfolgen.

Aufgrund der erfindungsgemäßen Einflussnahme auf den Wasserdampfgehalt lässt sich die Gefahr von Kohlenstoffablagerungen am Katalysator im Reformer vermindern, was seine Lebensdauer und Verfügbarkeit erhöht. Besonders günstig ist der Effekt beim Anfahren einer Anlage.

Im Vergleich zu einer herkömmlichen Verfahrensführung, beispielsweise mit Nassentstaubung, ist bei der erfindungsgemäßen Verfahrensführung vorteilhaft, dass im Reduktionsgas höhere Wasserstoff H₂ zu Kohlenmonoxid CO Verhältnisse H₂/CO einstellbar sind. Der Wasserdampfgehalt bei der Reformierung bestimmt das Verhältnis von CO und H2 im Reduktionsgas; durch die Einstellung des Wasserdampfgehaltes im entstaubten Topgas - gegebenenfalls in einem im Vergleich zu herkömmlicher Verfahrensführung weiteren Bereich - lässt sich somit der Ablauf der Reduktion beeinflussen. Wasserstoffreduktion ist schneller und überwiegend endotherm, Kohlenmonoxidreduktion ist langsamer als Wasserstoffreduktion und überwiegend exotherm. Flexible Einstellbarkeit erleichtert ökonomische Verfahrensführung. Bei schnell erreichter höherer Temperatur des Sättigungswassers und damit einhergehender höherer Temperatur des aus dem Sättiger austretenden trocken entstaubten Topgases kann schnell ein bestimmter ausreichend hoher Wasserdampfgehalt erzielt werden.

Bestehende Anlagen mit Nassentstaubung können einfach auf Trockenentstaubung umgerüstet und so für die Durchführung des Verfahrens vorbereitet werden. Das Ersetzen von Venturiwäschern durch Trockenfilter erfordert nur relativ geringe Investitionen. Vorteilhaft ist im Vergleich zu einem Betrieb mit Nassentstaubung auch, dass aus anderen Stellen des Verfahrens zur Reduktion von Metalloxiden stammende Abwässer mit hohem Feststoffanteil - beispielsweise aus der Entstaubung von Gasen aus der Heißbrikettierung, aus der Entstaubung von Gasen aus Heißtransportvorrichtungen, aus der Entstaubung von Sperrgasen aus Reduktionsreaktoren - nicht durch gemeinsame Aufarbeitung mit vergleichsweise wenig Feststoffe führendem Abwasser verdünnt werden. Das macht die Aufarbeitung solcher Abwässer einfacher.

Gegenüber einer Nassentstaubung bietet sich durch die Trockenentstaubung der Vorteil, dass Staub im Gegensatz zu Schlamm vor einer Weiterverwendung nicht aufwändig getrocknet werden muss.

Gegenüber einer Nassentstaubung bietet sich durch die Trockenentstaubung der Vorteil, dass weniger Druckverlust auftritt, und entsprechend für folgende Kompressoren weniger Leistung und Stromverbrauch notwendig ist zur Erzielung gewünschter Drücke.

Nach einer bevorzugten Ausführungsform werden Kaltwasser und Warmwasser einer Regelung unterworfen vermischt, die auf Basis von
- Temperaturmessung des Sättigungswassers,
   und/oder
- Temperaturmessung des gesättigten Topgases,
   und
- einer Sollwertvorgabe für die Temperatur und/oder den Wasserdampfgehalt des gesättigten Topgases und/oder einer Zielwertvorgabe für die Temperatur des Sättigungswassers
regelt.

Das aus dem Sättiger austretende trocken entstaubte Topgas wird gesättigtes Topgas genannt.

Die Temperatur des Sättigungswassers wird derart geregelt, dass die Temperatur und/oder der Wasserdampfgehalt des gesättigten Topgases einem Zielwert beziehungsweise einem Zielbereich entsprechen.

Über die Temperatur ist thermodynamisch auch der Wasserdampfgehalt definiert.

Nach einer bevorzugten Ausführungsform ist der Zielwert 323 - 373 K, bevorzugt 338 - 363 K, wobei die beiden Grenzen jeweils mit eingeschlossen sind. Bei Betrieb des Verfahrens bei einem Druck von 1 bar_{g} ergibt sich ein möglicher Wasserdampfgehalt von 6-51 Volumsprozent Vol%; bei Betrieb bei 2 bar_{g} ergibt sich ein möglicher Wasserdampfgehalt von 4-34 Volumsprozent Vol%. Gewünscht sind Werte von 10 - 20 Vol% Wasserdampfgehalt.

Nach einer vorteilhaften Ausführungsform ist zumindest ein Teil des Warmwassers, das eine höhere Temperatur als das Kaltwasser hat, aus dem Sättiger abgeführtes Sättigerabwasser.

Bei dieser Ausführungsform wird das Sättigerabwasser nicht in ein Wasserbecken - gegebenenfalls mit anderen warmen Wasserrückläufen aus anderen Stellen des Verfahrens zur Reduktion von Metalloxiden - eingeleitet, bevor es zur Nutzung als Warmwasser - gegebenenfalls als Gemisch mit den anderen warmen Wasserrückläufen - dem Sättiger zugeführt wird. Stattdessen wird das Sättigerabwasser direkt nach dem Verlassen des Sättigers der Nutzung als Warmwasser zugeführt.

Im Sättiger wird der Wasserdampfgehalt des trocken entstaubten Topgases im Gegenstrom mit Sättigungswasser eingestellt. Nach der Wechselwirkung im Gegenstrom wird das sogenannte Sättigerabwasser aus dem Gegenstrombereich, in dem die Wechselwirkung stattfindet, abgeführt. Das Sättigerabwasser weist aufgrund der höheren Gaseintrittstemperatur in den Sättiger und der darin stattfindenden Kondensation einer höhere Temperatur als das Sättigungswasser am Eintritt in den Sättiger auf.

Das Sättigerabwasser verlässt den Sättiger unter Druck -hydrostatischer Druck plus Gasdruck des eingeleiteten entstaubten Topgases. Daher kann aus dem Sättiger abgeführtes Sättigerabwasser, welches unter diesem Druck steht, einfach mit Kaltwasser vermischt werden. Die Vermischung wird auch dadurch vereinfacht, dass sie in der unmittelbaren Nähe des Sättigers stattfinden kann - ohne große Höhenunterschiede und damit hydrostatische Drücke überwinden zu müssen. Entsprechend müssen Pumpen, die Sättigerabwasser via Vermischung mit Kaltwasser in den Sättiger rezirkulieren, nicht zur Überwindung großer Höhenunterschiede ausgelegt sein - sie können kleiner sein und verbrauchen daher weniger Strom.
Wenn zur Einstellung einer höheren Temperatur dem Kaltwasser ein Warmwasser aus einem tiefer als der Sättiger angeordneten, unter Atmosphärendruck stehendem Wasserbecken zugemischt wird, müssen die Pumpen zwecks Anlieferung des Gemisches aus Kaltwasser und Warmwasser zum Sättiger, oder zur Anlieferung des Warmwassers aus dem Wasserbecken zu einem Kaltwasser in der Nähe des Sättigers den Druckunterschied überwinden können.

Besonders günstig wirkt sich die erfindungsgemäße Verfahrensführung beim Anfahren einer Anlage aus, da eine schnelle Erhöhung der Temperatur des Sättigungswassers möglich ist, wenn verhältnismäßig viel Sättigerabwasser als Warmwasser zur Temperaturerhöhung dem Kaltwasser zugemischt wird. Das erspart beispielsweise Aufwand zur Temperaturerhöhung von Kaltwasser gegenüber einer Variante, bei der Warmwasser aus einem Wasserbecken entnommen wird, wobei gerade beim Anfahren einer Anlage einige Zeit benötigt werden würde, um das Wasser im Wasserbecken auf die gewünschte Temperatur zu bringen. Bei schnell erreichter höherer Temperatur des Sättigungswassers und damit einhergehender höherer Temperatur des aus dem Sättiger austretenden trocken entstaubten Topgases kann schnell ein bestimmter ausreichend hoher Wasserdampfgehalt erzielt werden.

In der Regel wird nicht das gesamte Sättigerabwasser mit Kaltwasser gemischt; lediglich eine Teilmenge wird dem Kaltwasser zwecks Herstellung des Sättigungswassers zugemischt. Die Restmenge des Sättigerabwassers kann in ein Becken für sauberes Prozesswasser beziehungsweise Rein-Prozesswasser geleitet werden, da aufgrund der vorhergehenden Trockenentstaubung des Topgases bei der Wechselwirkung im Gegenstrom im Sättiger praktisch keine Verschmutzung des Sättigungswassers erfolgt. Dabei kann es zweckmäßig sein, vor Einleitung in das Becken zu kühlen, denn das Sättigerabwasser steht gegebenenfalls unter einem erhöhten Druck und Temperatur, so dass infolge Entspannung bei der Einleitung in das Becken erhöhte Verdampfung auftreten könnte. Die fachgerechte Entsorgung oder Reinigung von verschmutztem Sättigerabwasser wäre wesentlich aufwändiger; bei Einleitung in bestehende Entsorgungsbeziehungsweise Reinigungssysteme für anderweitig anfallende Prozessabwässer müssten diese größer ausgelegt werden.

Nach Abkühlung des Sättigerabwassers kann es als Kaltwasser wiederverwendet werden; bei einer solchen Kreislaufführung werden diffuse CO-Emissionen des Verfahrens zur Reduktion von Metalloxiden vermindert. Die erfindungsgemäße Verfahrensführung bietet also den Vorteil, dass für eine Temperatureinstellung des Sättigungswassers benötigtes warmes Wasser nicht aufwändig erzeugt und/oder herangeschafft werden muss, sondern im Sättiger selbst anfällt - als Sättigerabwasser - und ohne großen Aufwand in unmittelbarer Nähe zum Sättiger für die Mischung genutzt werden kann.

Je geringer die Sättigerabwassermenge ist, die zum Becken geführt wird, desto geringer ist auch die Menge an darin gelösten Gasbestandteilen. Diese geringeren Wassermengen können einfach in Entgasungsvorrichtungen weitgehend von darin gelösten Bestandteilen befreit und sicher entsorgt werden.

Bei einer Umrüstung bestehender Anlagen mit Nassentstaubung auf Trockenentstaubung können gegebenenfalls vorhandene Rezirkulationspumpen am Venturiwäscher für die Zuführung des Sättigerabwassers zum Kaltwasser wiederverwertet werden, da sie auch für diese Aufgabe geeignet sein werden, wenn keine großen hydrostatischen Drücke überwunden werden müssen.

Nach einer vorteilhaften Ausführungsform erfolgt während und/oder nach der Trockenentstaubung Entschwefelung des Topgases. Beispielsweise kann vor der Trockenentstaubung ein festes Adsorptionsmittel in den Strom des Topgases eingebracht werden, an dem Schwefelwasserstoff H₂S adsorbiert wird; Abscheidung aus dem Strom des Topgases erfolgt dann bei der Trockenentstaubung. Beispielsweise kann nach der Trockenentstaubung Entschwefelung auf Basis von Zinkoxid ZnO erfolgen, was für effiziente Durchführung Temperaturen von 473 - 723 K, bevorzugt 623 - 723 K, erfordert. Das Topgas hat in der Regel eine Temperatur von 623 - 673 K.

Entschwefelung nach der Trockenentstaubung kann auch mittels eines Nassverfahrens mit einer Entschwefelungsflüssigkeit - beispielsweise Reagenzien zur Entschwefelung enthaltendes Wasser - erfolgen, wie beispielsweise nach einem Reaktionsablauf

H₂S + ½ O₂ → H₂O + S.

Dabei kann ein einem ersten Schritt beispielsweise eine Absorption von Schwefelwasserstoff H₂S in Wasser H₂O erfolgen.

Die Entschwefelung mittels eines Nassverfahrens kann beispielsweise in einem Nassentschwefelungsaggregat vor dem Eintritt in den Sättiger erfolgen. Das Nassentschwefelungsaggregat kann dabei separat vom Sättiger ausgeführt sein. Das Nassentschwefelungsaggregat kann auch gemeinsam mit dem Sättiger in einem gemeinsamen Nassentschwefelungs-Sättigungs-Aggregat vorhanden sein, wobei das Gas zuerst die Nassentschwefelung durchläuft und dann den Sättiger.
Die Entschwefelung mittels eines Nassverfahrens kann auch im Sättiger erfolgen durch Eindüsung entsprechender Entschwefelungsflüssigkeit; beispielsweise kann ein Teil oder das ganze Sättigungswasser auch Reagenzien zur Entschwefelung enthalten.
Nach einer Ausführungsform kann Sättigerabwasser zumindest als Teilmenge der Entschwefelungsflüssigkeit genutzt werden.

Nach einer vorteilhaften Ausführungsform wird vor der Trockenentstaubung die Temperatur des Topgases vermindert; beispielsweise auf Temperaturen im Bereich von 423-533K, um Beschädigung von Trockenentstaubungsvorrichtungen wie beispielsweise Tuch- oder Schlauchfiltern zu vermeiden. Um danach eine Entschwefelung auf Basis von ZnO noch effizient durchführen zu können, ist eine Temperatur nach der Trockenentstaubung von 473 - 533 K bevorzugt.

Nach einer vorteilhaften Ausführungsform wird die Temperatur des Topgases vor der Trockenentstaubung durch indirekten Wärmeaustausch in einer Wärmerückgewinnungsanlage vermindert. Dabei kann entzogene Wärme beispielsweise zur Dampferzeugung genutzt werden, oder zur Vorwärmung von Erdgas, oder zur Vorwärmung von Brenngas für den Reformer, oder zur Vorwärmung von zu reformierendem Gas vor Einleitung in den Reformer.

Nach einer vorteilhaften Ausführungsform wird die Temperatur des Topgases vor der Trockenentstaubung durch Wassereindüsung oder eine Kombination von indirektem Wärmeaustausch und Wassereindüsung vermindert. Das ist apparativ wenig aufwendig, und erhöhter Wasserdampfgehalt ist hinsichtlich des später folgenden Sättigers unproblematisch.

Nach einer vorteilhaften Ausführungsform wird die Temperatur des Topgases vor der Trockenentstaubung durch Kühlgaseinleitung vermindert. Das als Kühlgas wirkende Gas, das eine geringere Temperatur hat als das Topgas, kann beispielsweise gesättigtes Topgas - also entnommen nach dem Sättiger - sein.

Apparativ können auch Vorkehrungen zur Durchführbarkeit mehrerer Ausführungsformen zur Verminderung der Temperatur des Topgases vor der Trockenentstaubung getroffen werden; beispielsweise durch einen Bypass ausgehend zwischen einer Wassereindüsungsvorrichtung und einer Wärmerückgewinnungsanlage, durch welchen die Wärmerückgewinnungsanlage vom Strom des Topgases umgangen werden kann. Dadurch ist es möglich, das Gas, welches um die Wärmerückgewinnungsanlage herumgeführt wird, noch ausreichend mit einer Wassereindüsungsvorrichtung zu kühlen.

Nach einer vorteilhaften Ausführungsform wird eine Teilmenge des trocken entstaubten Topgases, gegebenenfalls nach Entschwefelung, einem Reformer für die katalytische Reformierung als Brenngaskomponente zugeführt. Aufgrund der vorher erfolgten Entstaubung beziehungsweise Entschwefelung wird das Produkt der Verbrennung im Reformer - das Reformerabgas - wenig Staub und wenig SOₓ in die Umwelt emittieren. Gegenüber einer Nassentstaubung höhere Temperatur des entstaubten Topgases trägt zu einer energetisch günstigeren Verbrennung im Reformer bei; außerdem enthält das Topgas aufgrund der höheren Temperatur mehr Wasserdampf zur Verbesserung der Wärmeübertragung durch Strahlung. Gegebenenfalls wird zumindest eine Teilmenge dieser Brenngaskomponente gekühlt. Derart erhaltene gekühlte Brenngaskomponente kann zur Kühlgaseinleitung zur Verminderung der Temperatur des Topgases genutzt werden. Speziell bei Nutzung eines Sättigers ist es vorteilhaft, Abwasser eines Kühlers für die Brenngaskomponente gemeinsam mit dem Sättigerabwasser weiter zu behandeln.

Es wird erfindungsgemäß der Wasserdampfgehalt des für die Zubereitung des Rohgasgemisches bestimmten trocken entstaubten Topgases in einem Sättiger im Gegenstrom mit Sättigungswasser eingestellt. Das kann dadurch erfolgen, dass das gesamte für die Zubereitung des Rohgasgemisches bestimmte trocken entstaubte Topgas zur Einstellung seines Wasserdampfgehaltes einem Sättiger - auch mehrere parallel und/oder aufeinanderfolgend geschaltete Sättiger sind möglich - zugeführt wird. Es kann aber auch eine Portion des für die Zubereitung des Rohgasgemisches bestimmten trocken entstaubten Topgases keiner Einstellung des Wasserdampfgehaltes in einem Sättiger unterworfen werden, sondern in einem Bypass an dem - oder den Sättigern - Sättiger vorbeigeführt werden, in dem der Rest des für die Zubereitung des Rohgasgemisches bestimmten trocken entstaubten Topgases- also für die Zubereitung des Rohgasgemisches bestimmtes trocken entstaubtes Topgas minus Portion - Einstellung des Wasserdampfgehaltes unterworfen wird, und nachfolgend eine Vereinigung der Portion und des Restes erfolgen. Insgesamt ergibt sich also nach der Vereinigung für das für die Zubereitung des Rohgasgemisches bestimmte trocken entstaubte Topgas ein Wasserdampfgehalt entsprechend den Werten von Rest und Portion. Infolge der Einstellung des Wasserdampfgehaltes des Restes im Sättiger wird der nach der Vereinigung von Rest und Portion gewünschte Wasserdampfgehalt auch im Sättiger eingestellt. Vorteilhaft ist dabei, dass der Rest, in dem der Wasserdampfgehalt eingestellt wurde - wobei ein Temperaturverlust auftrat - , mit der heißeren Portion - an der kein Temperaturverlust durch Einstellung des Wasserdampfgehaltes eintrat - die Temperatur des bei der Vereinigung erhaltenen Gemischs anhebt im Vergleich zur Temperatur des Restes. Das ist zur Sicherstellung einer Überschreitung des Taupunktes vor einer Einspeisung des Gasstroms aus trocken entstaubtem gesättigtem Topgas in nachgeschaltete Kompressoren vorteilhaft. Eine solche Einspeisung ist zur Druckerhöhung für die später folgende Reformierung und Reduktion in einem Reduktionaggregat - beispielsweise einem Reduktionsschacht - notwendig. Im Vergleich zu einer Rückführung eines Anteils von durch Kompression erhitztem trocken entstaubtem gesättigtem Topgas in den der Kompression zugeführten Gasstrom zwecks Temperaturerhöhung in diesem Gasstrom aus trocken entstaubter gesättigter Teilmenge ist die erfindungsgemäße Lösung mit Bypass energiesparender, da für den Bypass vergleichsweise weniger energetischer Aufwand getrieben werden muss als für Rückführung von heißem Gas nach Kompression.

Ein weiterer Gegenstand der vorliegenden Anmeldung ist eine Vorrichtung zur Reduktion von Metalloxiden zu metallisiertem Material durch Kontakt mit heißem Reduktionsgas in einem Reduktionsaggregat,
- mit einem Reformer zur katalytischen Reformierung eines Rohgasgemischs, in welchen eine Rohgaszufuhrleitung mündet,
- mit einer Reduktionsgaszufuhrleitung, die vom Reformer ausgeht und in das Reduktionsaggregat mündet,
- mit einer Topgasabfuhrleitung, die vom Reduktionsaggregat ausgeht und in eine Trockenentstaubungsvorrichtung mündet,
- mit einer Kohlenwasserstoffzufuhrleitung, die in die Rohgaszufuhrleitung mündet,
dadurch gekennzeichnet, dass
ein Sättiger zur Einstellung des Wasserdampfgehaltes des trocken entstaubten Topgases vorhanden ist, von dem eine Sattgasleitung zur Führung von gesättigtem Topgas ausgeht, welche in die Rohgaszufuhrleitung mündet,
und eine von der Trockenentstaubungsvorrichtung ausgehende Entstaubungsleitung zur Führung von trocken entstaubtem Topgas eine Mündung in den Sättiger aufweist,
und eine Sättigungswasserzufuhrleitung zur Zufuhr von Sättigungswasser in den Sättiger mündet,
und eine Kaltwasserzufuhrleitung zur Zufuhr von Kaltwasser in die Sättigungswasserzufuhrleitung mündet,
und eine Warmwasserzufuhrleitung zur Zufuhr von Warmwasser in die Sättigungswasserzufuhrleitung mündet,
und eine Einstellvorrichtung zur Einstellung der Temperatur des Sättigungswassers durch Vermischung von Warmwasser mit Kaltwasser vorhanden ist.

Das Reduktionsaggregat kann beispielsweise ein Festbettreaktor sein oder ein Wirbelschichtreaktor.

Die Trockenentstaubungsvorrichtung ist beispielsweise auf Basis von Gewebefiltern wie beispielsweise Tuch- oder Schlauchfiltern.

Der Sättiger ist beispielsweise eine vom Sättigungswasser im Gegenstrom zum trocken entstaubten Topgas durchströmte Packungskolonne.

Die vom Sättiger ausgehende Sattgasleitung führt aus dem Sättiger austretendes trocken entstaubtes Topgas, welches auch gesättigtes Topgas genannt wird. Sie mündet in die Rohgaszufuhrleitung.

Die Einstellvorrichtung kann eine Steuervorrichtung oder eine Regelvorrichtung sein.

Eine erfindungsgemäße Vorrichtung ist geeignet zur Durchführung eines erfindungsgemäßen Verfahrens.

Nach einer vorteilhaften Ausführungsform ist die Einstellvorrichtung eine Regelvorrichtung, die
- zumindest einen Temperatursensor zur Messung der Temperatur des Sättigungswassers umfasst und/oder,
- zumindest einen Temperatursensor zur Messung der Temperatur des gesättigten Topgases umfasst.

Von dem Sättiger geht eine Sättigerabwasserleitung aus. Die Sättigerabwasserleitung dient dazu, Sättigerabwasser aus dem Sättiger abzuführen. Nach einer vorteilhaften Ausführungsform mündet die Sättigerabwasserleitung in die Warmwasserzufuhrleitung oder zweigt von der Sättigerabwasserleitung eine Rückführleitung ab, die in die Warmwasserzufuhrleitung mündet. Vorzugsweise befinden sich die Abzweigung und die Mündung nur auf einem geringen Höhenunterschied, um den Aufwand zur Überwindung von infolge von Höhenunterschieden auftretenden Druckunterschieden zu vermindern.

Nach einer vorteilhaften Ausführungsform ist in der Topgasabfuhrleitung eine Entschwefelungsvorrichtung vorhanden. Es kann sich beispielsweise um eine Vorrichtung zur Zugabe von festem Adsorptionsmittel in den Strom des Topgases handeln.

Nach einer vorteilhaften Ausführungsform ist in der Entstaubungsleitung eine Entschwefelungsvorrichtung vorhanden. Es kann sich beispielsweise um eine Vorrichtung handeln, welche in einem oder mehreren parallel angeordneten Behältern Zinkoxid ZnO enthält und bei welchem das entstaubte Gas beim Durchströmen und in Kontakt mit ZnO von H2S weitgehend befreit wird.

ZnO + H₂S → ZnS+H₂O

Das mit Schwefel beladene Zink-Material wird dann von Zeit zu Zeit wieder ausgetauscht.

Nach einer vorteilhaften Ausführungsform ist in der Topgasabfuhrleitung vorhanden zumindest ein Mitglied der Gruppe bestehend aus den Mitgliedern:
- Wärmerückgewinnungsanlage, bevorzugt mit indirektem Wärmetauscher,
- Wassereindüsungsvorrichtung,
- Mündung einer Kühlgaseinleitung.

Nach einer vorteilhaften Ausführungsform ist eine Brenngaskomponentenleitung vorhanden, die von der Entstaubungsleitung ausgeht, und in
eine Brenngaszufuhrleitung zur Zufuhr von Brenngas in den Reformer
mündet.

Nach einer vorteilhaften Ausführungsform ist in der Brenngaskomponentenleitung, oder einem gegebenenfalls vorhandenen Nebenast der Brenngaskomponentenleitung, eine Gaskühlvorrichtung vorhanden.

### Kurze Beschreibung der Zeichnungen

Anhand der folgenden schematischen beispielhaften Figuren wird die vorliegende Erfindung anhand von schematisch dargestellten beispielhaften Ausführungsformen erläutert.
Figur 1 zeigt eine Gesamtansicht einer erfindungsgemäßen Vorrichtung.
Figuren 2 bis 6 zeigen Ausführungsformen von Teilbereichen einer erfindungsgemäßen Vorrichtung.
Figuren 7 bis 10 zeigen Ausführungsformen in zu Figur 1 weitgehend analogen Darstellungen.
Figuren 11 bis 13 zeigen Ausführungsformen mit mehreren parallel geschalteten Sättigern.
Figur 14 zeigt einen Ausschnitt aus einer erfindungsgemäßen Vorrichtung.
Figur 15 zeigt einen Ausschnitt aus einer erfindungsgemäßen Vorrichtung mit einem Nassentschwefelungs-Sättigungs-Aggregat.

### Beschreibung der Ausführungsformen

### Beispiele

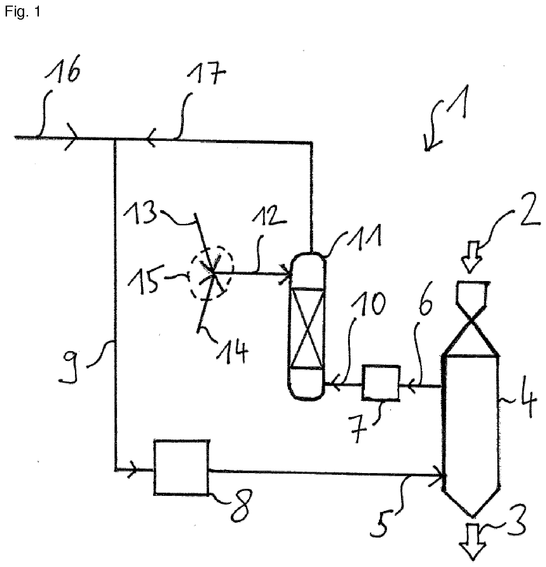

Figur 1 zeigt schematisch beispielhaft eine erfindungsgemäße Vorrichtung 1 zur Reduktion von Metalloxiden 2 zu metallisiertem Material 3 in einem Reduktionsaggregat 4. Metalloxide 2 werden oben in das Reduktionsaggregat 4, hier einem Festbettreaktor, eingegeben. Sie durchlaufen der Schwerkraft folgend den Reduktionsschacht des Festbettreaktors, wobei sie durch Kontakt im Gegenstrom mit über die Reduktionsgaszufuhrleitung 5 eingeleitetem heißem Reduktionsgas reduziert werden. Das metallisierte Material 3 - beispielsweise Eisenschwamm - wird unten aus dem Reduktionsaggregat entnommen - spezielle Austragsvorrichtungen sind zur besseren Übersichtlichkeit nicht extra dargestellt. Das verbrauchte Reduktionsgas wird als sogenanntes Topgas oben aus dem Reduktionsaggregat 4 über eine Topgasabfuhrleitung 6 abgeführt und in eine Trockenentstaubungsvorrichtung 7 geleitet. Das Reduktionsgas wird in einem Reformer 8 durch katalytische Reformierung eines Rohgasgemisches zumindest auf Basis von gasförmigen Kohlenwasserstoffen - im Fall dieses Beispiels Erdgas - und von trocken entstaubtem Topgas zubereitet. Das Rohgasgemisch wird dem Reformer über die Rohgaszufuhrleitung 9 zugeführt. Über die vom Reformer 8 ausgehende Reduktionsgaszufuhrleitung 5 wird das im Reformer 8 zubereitete Reduktionsgas dem Reduktionsaggregat 4 zugeführt.
Von der Trockenentstaubungsvorrichtung 7 geht eine Entstaubungsleitung 10 aus, durch welche für die Zubereitung des Rohgasgemisches bestimmtes trocken entstaubtes Topgas in den Sättiger 11 - hier eine Packungskolonne - geführt wird. In dem Sättiger 11 wird der Wasserdampfgehalt des trocken entstaubten Topgases eingestellt, indem es ihn im Gegenstrom unter Stoff- und Wärmeaustausch mit Sättigungswasser durchläuft. Dem Sättiger 11 wird das Sättigungswasser über die Sättigungswasserzufuhrleitung 12 zugeführt. In die Sättigungswasserzufuhrleitung 12 münden eine Kaltwasserzufuhrleitung 13 zur Zufuhr von Kaltwasser in die Sättigungswasserzufuhrleitung 12, und eine Warmwasserzufuhrleitung 14 zur Zufuhr von Warmwasser in die Sättigungswasserzufuhrleitung 12. Eine Einstellvorrichtung 15 zur Einstellung der Temperatur des Sättigungswassers durch Vermischung von Warmwasser mit Kaltwasser ist vorhanden. Das Warmwasser hat eine höhere Temperatur als das Kaltwasser; die Temperatur des Sättigungswassers wird unter Vermischung von Warmwasser und Kaltwasser auf einen Zielwert eingestellt.
Das Rohgasgemisch wird im dargestellten Beispiel durch Zusammenführung von Erdgas aus einer
Kohlenwasserstoffzufuhrleitung 16 und von trocken entstaubtem Topgas, welches den Sättiger 11 durchlaufen hat - also gesättigtem Topgas -, aus einer Sattgasleitung 17 erhalten.
Die Einstellvorrichtung kann eine Regelvorrichtung sein, die einen Temperatursensor zur Messung der Temperatur des Sättigungswassers umfasst und/oder, einen Temperatursensor zur Messung der Temperatur des gesättigten Topgases umfasst. Das ist zur besseren Übersichtlichkeit nicht extra dargestellt. In diesem Fall würde die Vermischung von Kaltwasser und Warmwasser einer Regelung unterworfen werden, die auf Basis von
- Temperaturmessung des Sättigungswassers,
   und/oder
- Temperaturmessung des gesättigten Topgases, und
- einer Sollwertvorgabe für die Temperatur und/oder den Wasserdampfgehalt des gesättigten Topgases und/oder einer Zielwertvorgabe für die Temperatur des Sättigungswassers
regelt.

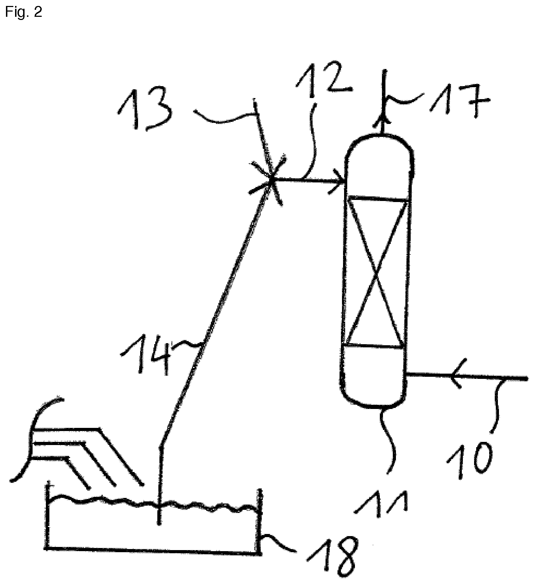

Für den Teilbereich aus Figur 1 um den Sättiger (11) herum zeigt Figur 2 mit mehr Details eine Ausführungsform, bei der Warmwasser aus einem Wasserbecken 18 entnommen wird, in dem warme Wasserrückläufe aus anderen Stellen des Verfahrens zur Reduktion von Metalloxiden eingeleitet werden, angedeutet durch 3 Leitungsmündungen am linken Rand des Wasserbeckens.

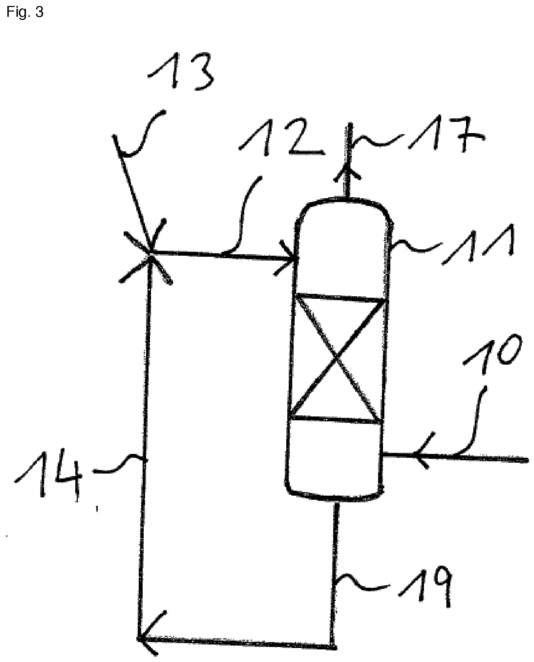

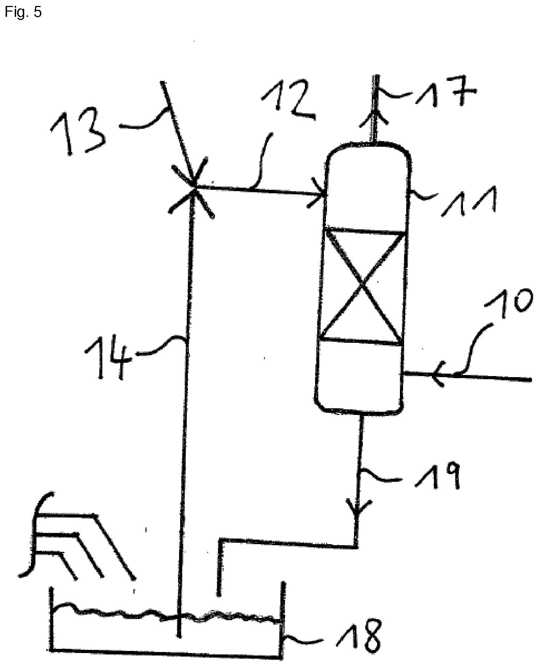

Figur 3 zeigt analog zu Figur 2 eine Ausführungsform, in der das Warmwasser aus dem Sättiger abgeführtes Sättigerabwasser ist. In Figur 3 ist eine von dem Sättiger 11 ausgehende Sättigerabwasserleitung 19 dargestellt, die wiederum in die in die Warmwasserzufuhrleitung 14 mündet. Die Sättigerabwasserleitung 19 dient dazu, Sättigerabwasser aus dem Sättiger 11 abzuführen. Bei dieser Ausführungsform wird das Sättigerabwasser nicht wie in Figur 5 in ein Wasserbecken eingeleitet, bevor es zur Nutzung als Warmwasser als Gemisch mit den anderen warmen Wasserrückläufen dem Sättiger zugeführt wird. Stattdessen wird das Sättigerabwasser direkt nach dem Verlassen des Sättigers der Nutzung als Warmwasser zugeführt. Ein Teilstrom, resultierend aus Wasserkondensation des Top Gases und Kaltwasserzufuhr, wird zu einem Wasserbecken abgeführt, was in Figur 3 aber nicht extra dargestellt ist.

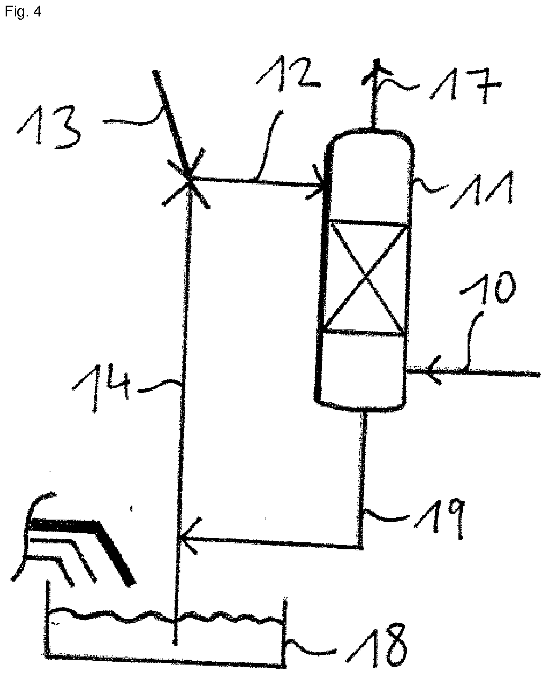

Figur 4 zeigt eine Ausführungsform, in der die Warmwasservarianten aus Figur 2 und 3 vereinigt sind.

Figur 5 zeigt eine Ausführungsform, in der die Sättigerabwasserleitung 19 eine Mündung in das Wasserbecken 18 aufweist. Ein Teil des Warmwassers wird also Sättigerabwasser sein.

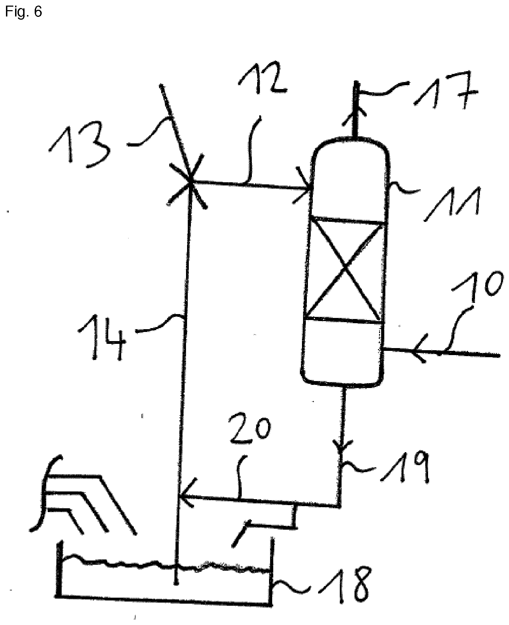

Figur 6 zeigt eine Ausführungsform, in der die Varianten der Figuren 4 und 5 vereinigt sind - die Sättigerabwasserleitung hat eine Mündung in das Wasserbecken 18, und von der Sättigerabwasserleitung 19 zweigt eine Rückführleitung 20 ab, die in die Warmwasserzufuhrleitung 14 mündet.
Wie schematisch dargestellt ist, befinden sich die Abzweigung und die Mündung der Rückführleitung 20 nur auf einem geringen Höhenunterschied, um den Aufwand zur Überwindung von infolge von Höhenunterschieden auftretenden Druckunterschieden zu vermindern.

Auf die Darstellung von gegebenenfalls vorhandenen Entgasern, mit denen Sättigerabwasser vor Einfüllung in das Wasserbecken entgast wird, wurde in den Figuren 5 und 6 zur besseren Übersichtlichkeit verzichtet.

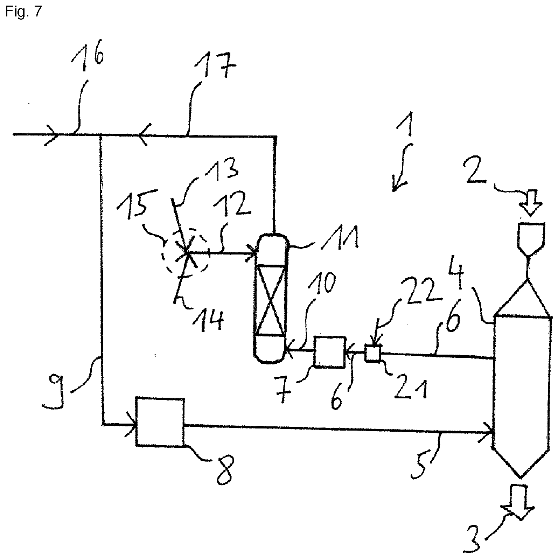

Figur 7 zeigt eine Ausführungsform in einer zu Figur 1 analogen Darstellung, in der zusätzlich während der Trockenentstaubung Entschwefelung des Topgases stattfindet. Dazu ist in der Topgasabfuhrleitung 6 eine Entschwefelungsvorrichtung 21 vorhanden; im dargestellten Fall dient diese Entschwefelungsvorrichtung dazu, ein festes Adsorptionsmittel 22 in den Strom des Topgases einzubringen, es kann sich beispielsweise um ein Zugaberohr handeln, durch das das Adsorptionsmittel 22 in die Topgasabfuhrleitung 6 eingebracht wird. In der in Strömungsrichtung des Topgases folgenden Trockenentstaubungsvorrichtung 7 wird das Adsorptionsmittel abgeschieden und adsorbiert dort Schwefel beziehungsweise Schwefelverbindungen, beispielsweise Schwefelwasserstoff H2S, aus dem Topgas.

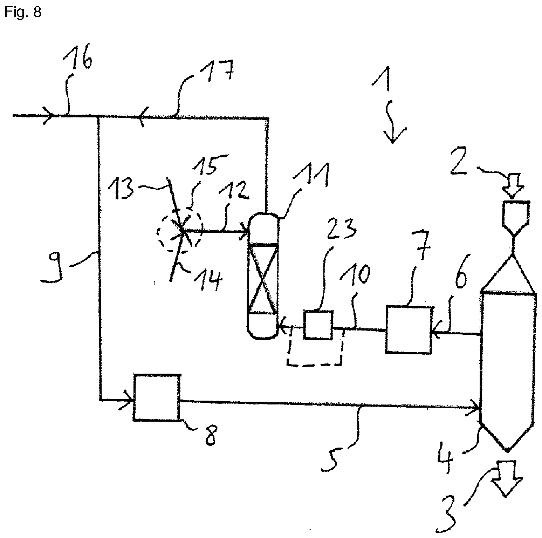

Figur 8 zeigt eine Ausführungsform in einer zu Figur 1 analogen Darstellung, in der zusätzlich nach der Trockenentstaubung Entschwefelung des Topgases stattfindet. Dazu ist in der Entstaubungsleitung 10 eine Entschwefelungsvorrichtung 23 vorhanden. Ein optional vorhandener Bypass für Betriebssituationen, in denen zumindest eine Teilmenge des trocken entstaubten Topgases die Entschwefelungsvorrichtung 23 nicht durchlaufen soll, ist strichliert dargestellt. Die Entschwefelungsvorrichtung 23 ist beispielsweise auf Basis von Zinkoxid ZnO wirkend; ein Zinkoxid enthaltender Behälter wird vom trocken entstaubten Topgas durchströmt, wobei entschwefelt wird.

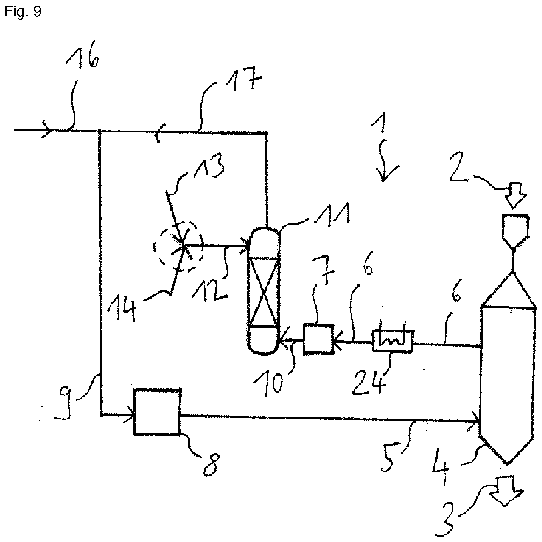

Figur 9 zeigt eine Ausführungsform in einer zu Figur 1 analogen Darstellung, in der vor der Trockenentstaubung die Temperatur des Topgases vermindert wird. Die Temperatur des Topgases wird vor der Trockenentstaubung durch indirekten Wärmeaustausch in einer Wärmerückgewinnungsanlage 24 - im dargestellten Fall mit indirektem Wärmetauscher - in der Topgasabfuhrleitung 6 vermindert.

Alternativ dazu kann die Temperatur des Topgases vor der Trockenentstaubung durch Wassereindüsung oder eine Kombination von indirektem Wärmetauscher und Wassereindüsung vermindert werden. Auf die gesonderte Darstellung einer Wassereindüsungsvorrichtung anstelle oder zusätzlich zur Wärmerückgewinnungsanlage 24 wird aus Gründen der Übersichtlichkeit verzichtet. Alternativ dazu oder in Kombination mit Wassereindüsung und/oder Wärmetausch kann die Temperatur des Topgases vor der Trockenentstaubung durch Zufuhr von Kühlgas in den Strom des Topgases gesenkt werden. Auf die gesonderte Darstellung einer Kühlgaseinleitung anstelle von oder zusätzlich zu Wärmerückgewinnungsanlage 24 und/oder Wassereindüsungsvorrichtung wird aus Gründen der Übersichtlichkeit verzichtet.

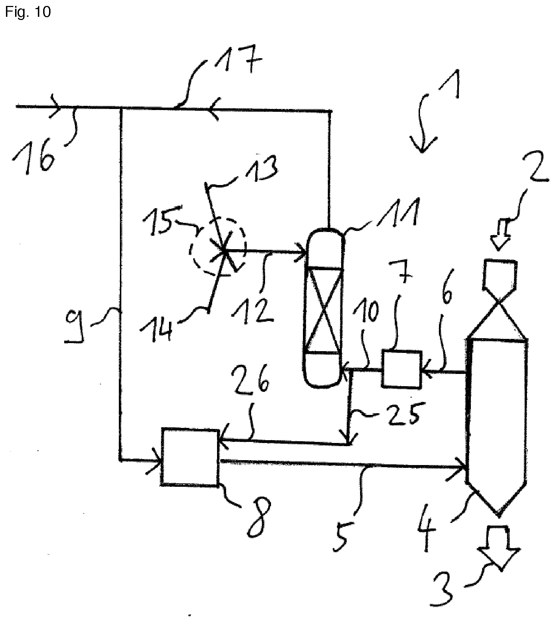

Figur 10 zeigt eine Ausführungsform in einer zu Figur 1 analogen Darstellung, in der eine Teilmenge des - gegebenenfalls trocken entstaubten Topgases - optional nach einer zur besseren Übersichtlichkeit nicht dargestellten Entschwefelung - dem Reformer 8 für die katalytische Reformierung als Brenngaskomponente zugeführt wird. Wie beispielsweise aus MIDREX®-Verfahren wie in WO2011/012448 und WO2011/012452, deren Inhalt Teil der Offenbarung der vorliegenden Anmeldung ist, bekannt, wird die Energie zur Reformierung durch Verbrennung eines Brenngases bereitgestellt; auf die Darstellung von Details zu diesen bekannten Aspekten wird zur besseren Übersichtlichkeit verzichtet. In Figur 10 ist eine Brenngaskomponentenleitung 25 vorhanden, die von der Entstaubungsleitung 10 ausgeht, und in eine Brenngaszufuhrleitung 26 zur Zufuhr von Brenngas in den Reformer 8 mündet.

In der Brenngaskomponentenleitung 25, oder einem gegebenenfalls vorhandenen Nebenast der Brenngaskomponentenleitung, kann eine Gaskühlvorrichtung vorhanden sein; das ist zur besseren Übersichtlichkeit nicht dargestellt. Die gekühlte Brenngaskomponente kann mit ungekühlter Brenngaskomponenten vereinigt werden, oder zur Kühlung dem Reduktionsgas zugeführt werden. Falls bei der Kühlung warmes Wasser anfällt, kann es als Warmwasser für den Sättiger 11 genutzt werden.

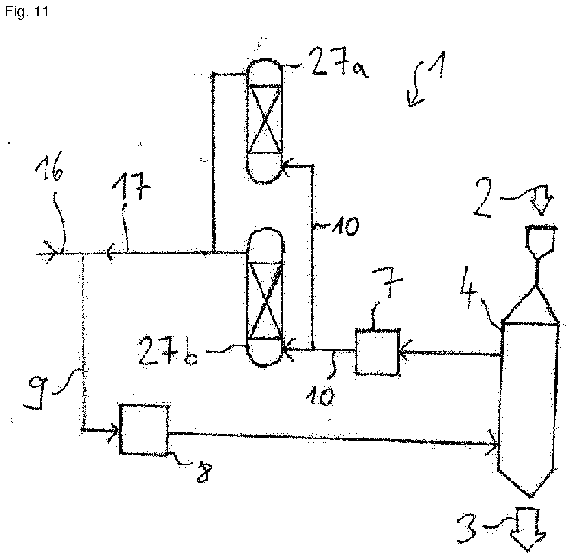

Figur 11 zeigt eine Ausführungsform in einer zu Figur 1 analogen Darstellung, in der zwei Sättiger 27a, 27b parallel geschaltet sind.

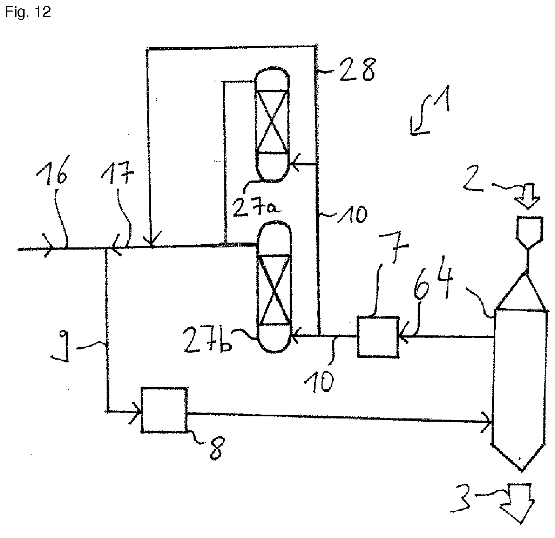

Figur 12 zeigt in zu Figur 11 weitgehend analoger Darstellung eine Ausführungsform, in der anders als in den vorhergehenden Figuren nicht die gesamte Teilmenge des trocken entstaubten Topgases, die für die Zubereitung des Reduktionsgases vorgesehen ist, zur Einstellung ihres Wasserdampfgehaltes einem Sättiger - auch die zwei parallel geschaltete Sättiger 27a,27b sind möglich - zugeführt wird. Es wird eine Portion der Teilmenge des trocken entstaubten Topgases, die für die Zubereitung des Reduktionsgases vorgesehen ist, keiner Einstellung des Wasserdampfgehaltes in einem Sättiger unterworfen, sondern in einem Bypass 28 an den Sättigern 27a,27b vorbeigeführt. Der Rest der Teilmenge wird in den Sättigern 27a,27b Einstellung des Wasserdampfgehaltes unterworfen. Nachfolgend erfolgt eine Vereinigung der Portion und des Restes der Teilmenge. Die sich daraus ergebende Temperaturerhöhung gegenüber der Temperatur des Restes ist für die notwendige Einspeisung in nachgeschaltete Kompressoren vorteilhaft.

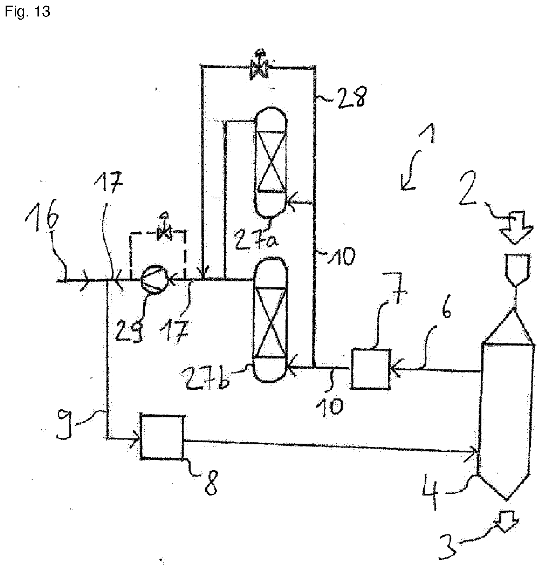

Figur 13 zeigt in einer zu Figur 12 weitgehend analogen Darstellung einen in der Sattgasleitung 17 vorhandenen Kompressor 29. Der in Figur 12 bereits diskutierte Bypass 28 mündet vor dem Kompressor 29 in die Sattgasleitung 17. Strichliert als optional vorhanden angedeutet ist eine Rückführung eines Anteils von durch Kompression erhitztem trocken entstaubtem gesättigtem Topgas in den der Kompression zugeführten Gasstrom zwecks Temperaturerhöhung in diesem Gasstrom.

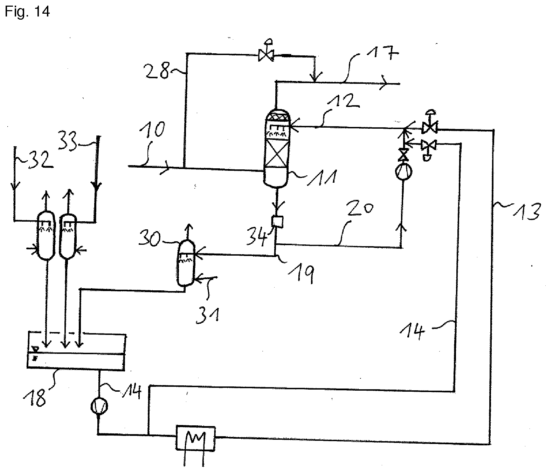

Figur 14 zeigt einen Ausschnitt aus einer erfindungsgemäßen Vorrichtung, wobei zur besseren Übersichtlichkeit Reduktionsaggregat, Reformer und Trockenentstaubung nicht dargestellt sind. Für gleiche Vorrichtungsteile werden gegebenenfalls bereits verwendete Bezugszeichen verwendet. Ein trocken entstaubtes Topgas wird durch die Entstaubungsleitung 10 zum Sättiger 11 geführt. Von der Entstaubungsleitung 10 geht ein Bypass 28 aus, durch den eine Portion am Sättiger vorbeigeführt wird. Der Rest wird durch die Entstaubungsleitung 10 in den Sättiger eingeleitet. Grundsätzlich könnten auch mehrere Sättiger parallel geschaltet vorhanden sein. Im Sättiger 10 ist die Packung mit einem durch ein X gekennzeichneten Abschnitt schematisch dargestellt. Ebenso ist am oberen Ende des Sättigers ein Demister schematisch dargestellt durch eine schmale schraffierte Zone. Über die Sattgasleitung 17 wird das gesättigte Topgas aus dem Sättiger 10 ausgeleitet. In die Sattgasleitung 17 mündet der Bypass 28, in welchem auch ein Regelventil dargestellt ist. Durch die Sättigerabwasserleitung 19 wird das Sättigerabwasser aus dem Sättiger 11 abgeführt. Dargestellt ist in der Sättigerabwasserleitung 19 ein optional vorhandener Entgaser 30 mit zugehöriger Luftzufuhr 31. Hinter dem Entgaser mündet die Sättigerabwasserleitung in ein Wasserbecken 18, in welches entgastes Sättigerabwasser eingeleitet wird. Ebenfalls dargestellt sind als optional vorhanden eine Sealgaskühlerleitung 32 und eine Reformgaskühlerleitung 33 - zur Führung von Prozesswasser aus einem Kühler für reformiertes Gas -, durch die warmes Prozesswasser in das Wasserbecken 18 eingeleitet wird, jeweils mit Entgaser.In der Sättigerabwasserleitung 19 ist auch ein Vorrichtungsteil 34 dargestellt, das ein Kontrollventil oder eine Siphon-Abdichtung sein kann. Zu sehen ist auch, wie von der Sättigerabwasserleitung 19 eine Rückführleitung 20 ausgeht, die hinter einer Pumpe in die Warmwasserzufuhrleitung 14 mündet. In Figur 14 wird dem Sättigerabwasser über die Warmwasserzufuhrleitung 14 Warmwasser zugeführt. Die Warmwasserzufuhrleitung 14 entspringt dem Wasserbecken 18. Die vereinigten Mengen werden gemeinsam mit Kaltwasser aus der Kaltwasserzufuhrleitung 13 über die Sättigungswasserzufuhrleitung 12 dem Sättiger zugeführt.

Von der Warmwasserzufuhrleitung 14 zweigt die Kaltwasserzufuhrleitung 13 ab. Diese enthält einen Wärmetauscher zum Kühlen des Warmwassers - damit wird Kaltwasser hergestellt, welches dem Sättiger 11 zusammen mit Sättigerabwasser und Warmwasser aus der Warmwasserzufuhrleitung 13 als Sättigungswasser über die Sättigungswasserzufuhrleitung 12 zugeführt wird. Zudem sind in den verschiedenen Leitungen Pumpen und Regelventile gezeigt. Die Verteilung des Sättigungswassers im Sättiger 11 ist mit angedeuteten Verteilungsdüsen schematisch dargestellt.

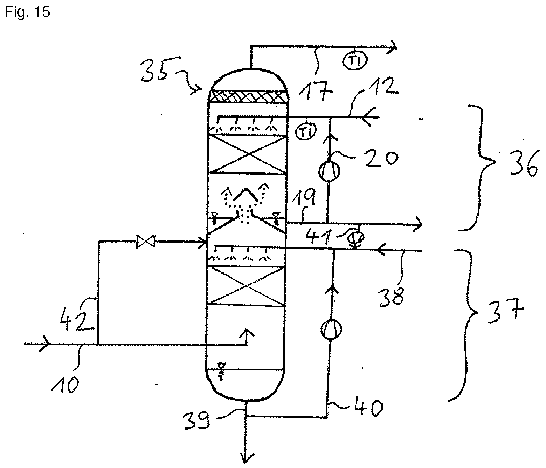

Figur 15 zeigt einen Ausschnitt aus einer erfindungsgemäßen Vorrichtung, wobei zur besseren Übersichtlichkeit Reduktionsaggregat, Reformer und Trockenentstaubung nicht dargestellt sind. Für gleiche Vorrichtungsteile werden gegebenenfalls bereits verwendete Bezugszeichen verwendet. Entschwefelung findet nach der Trockenentstaubung statt, trocken entstaubtes Topgas wird durch die Entstaubungsleitung 10 dem Nassentschwefelungs-Sättigungs-Aggregat 35 zugeführt. In dem Nassentschwefelungs-Sättigungs-Aggregat 35 ist im oberen Teil ein Sättiger 36 vorhanden, im unteren Teil ein Nassentschwefelungsaggregat 37. Aus dem Nassentschwefelungsaggregat 37 in den Sättiger 36 eintretendes Gas ist mit punktierten Pfeilen dargestellt. Das Nassentschwefelungsaggregat 37 weist eine Zufuhrleitung 38, Abfuhrleitung 39, und Rezyklierungsleitung 40 inklusive Pumpe zur Zufuhr frischer, Abfuhr verbrauchter, und Rezyklierung verbrauchter Entschwefelungsflüssigkeit auf. Der Sättiger weist Sättigungswasserzufuhrleitung 12, Sättigerabwasserleitung 19 und Rückführleitung 20 auf. Über eine Einspeisleitung 41 kann Sättigerabwasser in die Zufuhrleitung 38 für Entschwefelungsflüssigkeit eingespeist werden.
Eine optional vorhandene von der Entstaubungsleitung 10 ausgehende Umgehungsleitung 42 mündet am sättigerseitigen Ende des Nassentschwefelungsaggregates 37 in das Nassentschwefelungs-Sättigungs-Aggregat 35 ein. Darüber kann die sowohl dem Nassentschwefelungsaggregat 37 als auch dem Sättiger 36 zugeführte Menge von trocken entstaubtem Topgas geregelt werden; gegebenenfalls ist für den Reformer nur Sättigung, aber keine Entschwefelung notwendig. Oben wird aus dem Nassentschwefelungs-Sättigungs-Aggregat 35 über die Sattgasleitung 17 ein entschwefeltes gesättigtes Topgas ausgeleitet.

Wenn für das Verständnis des jeweils diskutierten Details nicht notwendig, wurde zur besseren Übersichtlichkeit in den Figuren gegebenenfalls auf eine Darstellung von Elementen verzichtet, beispielsweise auf die Darstellung von Sättigungswasserzufuhrleitung, Kaltwasserzufuhrleitung, Warmwasserzufuhrleitung.

Einzelne oder mehrere der in den Figuren gezeigten Ausführungsformen können auch kombiniert werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Anführungen

### Patentliteratur

WO2011/012448
WO2011/012452

### Bezugszeichenliste

- 1: Vorrichtung zur Reduktion von Metalloxiden
- 2: Metalloxide
- 3: Metallisiertes Material
- 4: Reduktionsaggregat
- 5: Reduktionsgaszufuhrleitung
- 6: Topgasabfuhrleitung
- 7: Trockenentstaubungsvorrichtung
- 8: Reformer
- 9: Rohgaszufuhrleitung
- 10: Entstaubungsleitung
- 11: Sättiger
- 12: Sättigungswasserzufuhrleitung
- 13: Kaltwasserzufuhrleitung
- 14: Warmwasserzufuhrleitung
- 15: Einstellvorrichtung
- 16: Kohlenwasserstoffzufuhrleitung
- 17: Sattgasleitung
- 18: Wasserbecken
- 19: Sättigerabwasserleitung
- 20: Rückführleitung
- 21: Entschwefelungsvorrichtung
- 22: Adsorptionsmittel
- 23: Entschwefelungsvorrichtung
- 24: Wärmerückgewinnungsanlage
- 25: Brenngaskomponentenleitung
- 26: Brenngaszufuhrleitung
- 27a,27b: Sättiger
- 28: Bypass
- 29: Kompressor
- 30: Entgaser
- 31: Luftzufuhr
- 32: Sealgaskühlerleitung
- 33: Reformgaskühlerleitung
- 34: Vorrichtungsteil
- 35: Nassentschwefelungs-Sättigungs-Aggregat
- 36: Sättiger
- 37: Nassentschwefelungsaggregat
- 38: Zufuhrleitung
- 39: Abfuhrleitung
- 40: Rezyklierungsleitung
- 41: Einspeisleitung
- 42: Umgehungsleitung

## Patentansprüche

1. Verfahren zur Reduktion von Metalloxiden (2) zu metallisiertem Material (3) durch Kontakt mit heißem Reduktionsgas, wobei ein Topgas anfällt, wobei Trockenentstaubung des Topgases stattfindet, und wobei das Reduktionsgas zumindest zum Teil durch katalytische Reformierung eines Rohgasgemischs erhalten wird,
wobei das Rohgasgemisch zumindest auf Basis von
- gasförmigen Kohlenwasserstoffen, bevorzugt Erdgas, und von
- zumindest einer Teilmenge des trocken entstaubten Topgases
zubereitet wird,
**dadurch gekennzeichnet, dass**
der Wasserdampfgehalt des für die Zubereitung des Rohgasgemisches bestimmten trocken entstaubten Topgases in einem Sättiger (11) im Gegenstrom mit Sättigungswasser eingestellt wird, wobei die Temperatur des Sättigungswassers unter Vermischung von Kaltwasser mit einem Warmwasser, das eine höhere Temperatur als das Kaltwasser hat, zur Herstellung des Sättigungswassers
auf einen Zielwert eingestellt wird.

2. Verfahren nach Anspruch 1, wobei Kaltwasser und Warmwasser einer Regelung unterworfen vermischt werden, die auf Basis von
- Temperaturmessung des Sättigungswassers,
und/oder
- Temperaturmessung des gesättigten Topgases,
und
- einer Sollwertvorgabe für die Temperatur und/oder den Wasserdampfgehalt des gesättigten Topgases und/oder einer Zielwertvorgabe für die Temperatur des Sättigungswassers
regelt.

3. Verfahren nach einem der Ansprüche 1 bis 2, **dadurch gekennzeichnet, dass** zumindest ein Teil des Warmwassers aus dem Sättiger (11) abgeführtes Sättigerabwasser ist.

4. Verfahren nach einem der Ansprüche 1 bis 3, **dadurch gekennzeichnet, dass** während und/oder nach der Trockenentstaubung Entschwefelung des Topgases erfolgt.

5. Verfahren nach einem der Ansprüche 1 bis 4, **dadurch gekennzeichnet, dass** vor der Trockenentstaubung die Temperatur des Topgases vermindert wird.

6. Verfahren nach einem der Ansprüche 1 bis 5, **dadurch gekennzeichnet, dass** eine Teilmenge des trocken entstaubten Topgases, gegebenenfalls nach Entschwefelung, einem Reformer (8) für die katalytische Reformierung als Brenngaskomponente zugeführt wird.

7. Verfahren nach einem der Ansprüche 1 bis 6, **dadurch gekennzeichnet, dass** das gesamte für die Zubereitung des Rohgasgemisches bestimmte trocken entstaubte Topgas zur Einstellung seines Wasserdampfgehaltes einem Sättiger (11) zugeführt wird.

8. Verfahren nach einem der Ansprüche 1 bis 6, **dadurch gekennzeichnet, dass** eine Portion des für die Zubereitung des Rohgasgemisches bestimmten trocken entstaubten Topgases in einem Bypass (28) an dem Sättiger (11) vorbeigeführt wird, in dem der Rest des für die Zubereitung des Rohgasgemisches bestimmten trocken entstaubten Topgases Einstellung des Wasserdampfgehaltes unterworfen wird,
und nachfolgend eine Vereinigung der Portion und des Restes erfolgt.

9. Vorrichtung zur Reduktion von Metalloxiden (2) zu metallisiertem Material (3) durch Kontakt mit heißem Reduktionsgas in einem Reduktionsaggregat (4),
- mit einem Reformer (8) zur katalytische Reformierung eines Rohgasgemischs, in welchen eine Rohgaszufuhrleitung (9) mündet,
- mit einer Reduktionsgaszufuhrleitung (5), die vom Reformer (8) ausgeht und in das Reduktionsaggregat (4) mündet,
- mit einer Topgasabfuhrleitung (6), die vom Reduktionsaggregat (4) ausgeht und in eine Trockenentstaubungsvorrichtung (7) mündet,
- mit einer Kohlenwasserstoffzufuhrleitung (16), die in die Rohgaszufuhrleitung (9) mündet,
**dadurch gekennzeichnet, dass**
ein Sättiger (11) zur Einstellung des Wasserdampfgehaltes des trocken entstaubten Topgases vorhanden ist, von dem eine Sattgasleitung (17) zur Führung von gesättigtem Topgas ausgeht, welche in die Rohgaszufuhrleitung (9) mündet,
und eine von der Trockenentstaubungsvorrichtung (7) ausgehende Entstaubungsleitung (10) zur Führung von trocken entstaubtem Topgas eine Mündung in den Sättiger (11) aufweist,
und eine Sättigungswasserzufuhrleitung (12) zur Zufuhr von Sättigungswasser in den Sättiger (11) mündet,
und eine Kaltwasserzufuhrleitung (13) zur Zufuhr von Kaltwasser in die Sättigungswasserzufuhrleitung (12) mündet,
und eine Warmwasserzufuhrleitung (14) zur Zufuhr von Warmwasser in die Sättigungswasserzufuhrleitung (12) mündet,
und eine Einstellvorrichtung (15) zur Einstellung der Temperatur des Sättigungswassers durch Vermischung von Warmwasser mit Kaltwasser vorhanden ist.

10. Vorrichtung nach Anspruch 9, **dadurch gekennzeichnet, dass** die Einstellvorrichtung (15) eine Regelvorrichtung ist, die
- zumindest einen Temperatursensor zur Messung der Temperatur des Sättigungswassers umfasst und/oder,
- zumindest einen Temperatursensor zur Messung der Temperatur des gesättigten Topgases
umfasst.

11. Vorrichtung nach Anspruch 9 oder 10, wobei vom Sättiger (11) eine Sättigerabwasserleitung (19) ausgeht, **dadurch gekennzeichnet, dass** die Sättigerabwasserleitung in die Warmwasserzufuhrleitung mündet oder dass von der Sättigerabwasserleitung (19) eine Rückführleitung (20) abzweigt, die in die Warmwasserzufuhrleitung (14) mündet.

12. Vorrichtung nach einem der Ansprüche 9 bis 11, **dadurch gekennzeichnet, dass** in der Topgasabfuhrleitung (6) eine Entschwefelungsvorrichtung (21) vorhanden ist.

13. Vorrichtung nach einem der Ansprüche 9 bis 11, **dadurch gekennzeichnet, dass** in der Entstaubungsleitung (10) eine Entschwefelungsvorrichtung (21) vorhanden ist.

14. Vorrichtung nach einem der Ansprüche 9 bis 13, **dadurch gekennzeichnet, dass** eine Brenngaskomponentenleitung (25) vorhanden ist, die von der Entstaubungsleitung (10) ausgeht, und in eine Brenngaszufuhrleitung (26) zur Zufuhr von Brenngas in den Reformer (8) mündet.

15. Vorrichtung nach Anspruch 14, **dadurch gekennzeichnet, dass** in der Brenngaskomponentenleitung (25), oder einem gegebenenfalls vorhandenen Nebenast der Brenngaskomponentenleitung (25), eine Gaskühlvorrichtung vorhanden ist.
